# EUROPEAN PATENT SPECIFICATION

(11) **EP 0 808 875 B1**
(45) Date of publication and mention of the grant of the patent: **15.09.1999**
(21) Application number: 97303555.3
(22) Date of filing: 23.05.1997
(51) Int. Cl.: C08L 83/04, C08K 13/06

(54) **Silicone rubber compositions**
Silikonkautschukmischungen
Compositions de caoutchouc de silicone

(30) Priority: 24.05.1996 JP 15297796
(43) Date of publication of application: 26.11.1997
(73) Proprietor: Dow Corning Toray Silicone Company Ltd., Ichihara-shi, Chiba Prefecture (JP)
(72) Inventor: Matsushita, Takao, Ichihara-shi, Chiba (JP); Shigehisa, Yasumichi, Ichihara-shi, Chiba (JP); Tsuji, Yuichi, Ichihara-shi, Chiba (JP)
(74) Representative: Lewin, John Harvey

(56) References cited:
- PATENT ABSTRACTS OF JAPAN vol. 095, no. 006, 31 July 1995 & JP 07 070923 A (TORAY DOW CORNING SILICONE CO LTD), 14 March 1995,

## Description

This invention relates to curable silicone rubber compositions that before cure will exhibit good fluidity and excellent moldability. These composition then cure to yield flame retardant silicone rubbers that have excellent aging resistance and electrical properties, such as resistance, to tracking, electrical arc resistance, and erosion.

Inorganic fillers such as silica, aluminum oxide, aluminum hydroxide, and quartz are blended into silicone rubber compositions that demand excellent flame retardancy and electrical insulating properties. Typical applications are anode caps, plug boots, insulators, and flame-retardant electrical wire and cable. Unfortunately, while high loading levels of inorganic fillers enhance the electrical insulating properties, the resulting silicone rubber compositions have very high viscosities and cannot be used in applications where fluidity is required, for example, as in injection molding.

There have also been attempts to improve the flame retardancy of addition-curing silicone rubber compositions, based on low-viscosity polyorganosiloxane, inorganic filler, and platinum catalyst, through the addition of various flame retardants. This latter technology, however, requires increased additions of inorganic filler to obtain satisfactory flame retardancy and mechanical strength. Moreover, the silicone rubber compositions afforded by said technology have such high viscosities that they are no longer readily pumpable compositions.

To solve these problems, the preparation of curable, flame-retardant silicone rubber compositions has been pursued by reducing the amount of filler, increasing the thickening of inorganic filler, and replacing formerly retilized fillers with inorganic fillers of large particle sizes. However, silicone rubber compositions thus prepared provide heat-cured silicone rubbers that have reduced mechanical strength and limited applications.

The need therefore exists for a curable silicone rubber composition that before cure evidences suitable fluidity and excellent moldability. After cure, it is also desired that said curable composition achieve flame retardant silicone rubber moldings which have high mechanical strength and electrical insulating properties.

As a result of extensive investigations to solve these problems, we have unexpectedly found that an admixture, in specific proportions, of certain inorganic fillers and flame retardants in a particular addition-curing silicone rubber composition is an effective approach.

Our curable silicone rubber compositions comprise: (A) polyorganosiloxane; (B) fumed silica; (C) zinc carbonate afforded surface treatment with an organosilicon compound selected from organosilanes, organosilazanes, organosiloxane oligomers and their mixtures; (D) polyorganohydrogensiloxane; and (E) platinum catalyst.

These liquid silicone rubber compositions comprise
(A) 100 weight parts of polyorganosiloxane having a viscosity at 25°C of from 100 to 100,000 mPa·s and the formula${\text{R}}^{\text{1}} {}_{\text{a}} {\text{R}}^{\text{2}} {}_{\text{b}} {\text{SiO}}_{\text{(4-a-b)/2}} \text{,}$ where R¹ represents monovalent hydrocarbon groups that are free of aliphatically unsaturated bonding, R² represents aliphatically unsaturated hydrocarbon groups, a has a value from 1.90 to 2.05, b has a value from 0.0005 to 0.1, and a + b has a value of 1.91 to 2.06,
(B) 1 to 60 weight parts of fumed silica with a specific surface area of at least 50 m²/g;
(C) 1 to 200 weight parts of zinc carbonate afforded by treating the surface with an organosilicon compound selected from the group consisting of organosilanes, organosilazanes, organosiloxane oligomers, and their mixtures;
(D) polyorganohydrogensiloxane comprising at least 2 silicon-bonded hydrogen atoms in each molecule, in a quantity that affords a value from 0.5:1 to 20:1 for the ratio of the number of moles of silicon-bonded hydrogen to the number of moles of silicon-bonded aliphatically unsaturated hydrocarbon groups in component (A);
   and
(E) platinum catalyst in a catalytic quantity.
   Our claimed silicone rubber composition (A) to (E) can further comprise: (F) 1 to 200 weight parts of aluminum hydroxide obtained by surface treatment with an organosilicon compound selected from the group consisting of organosilanes, organosilazanes, organosiloxane oligomers, and their mixtures. Alternatively, this our silicone rubber composition comprising components (A) to (E), or (A) to (F), may also further comprise:
(G) 0.001 to 1 weight part of a triazole compound; or
(H) the reaction mixture of
   (a) a platinum compound, at 1 to 1,000 weight parts of platinum metal for each 1,000,000 weight parts of component (A),
      and
   (b) 3,5-dimethyl-1-hexyn-3-ol. at 1 to 1,000 weight parts as platinum metal for each 1,000,000 weight parts component (A).

To explain in greater detail, component (A) is the major component of the present composition. R¹ in the formula for (A) represents monovalent hydrocarbon groups that are free of aliphatically unsaturated bonding, for example, phenyl or alkyl, such as methyl, ethyl, propyl, butyl, and octyl. R² represents aliphatically unsaturated hydrocarbon groups exemplified by alkenyl groups, such as vinyl or allyl. The subscript a has a value from 1.90 to 2.05; the subscript b has a value from 0.0005 to 0.1; and a + b has a value from 1.91 to 2.06. The polyorganosiloxane (A) will ordinarily have a straight-chain molecular structure, but may be branched to some extent. The aliphatically unsaturated hydrocarbon group can be bonded at the terminal or non-terminal positions on the molecular chain, or at both positions. Preferably, said group is present at least at both molecular chain terminals based on considerations of the post-cure mechanical properties. This aliphatically unsaturated hydrocarbon group may be a single hydrocarbon group, or it may be a mixture of 2 or more of such groups. The viscosity of polyorganosiloxane (A) at 25°C should be from 100 to 100,000 mPa·s, and preferably is from 100 to 50,000 mPa·s. Lower viscosities cause a decline in mechanical strength, while higher viscosities cause excessively high viscosity and a diminished flowability. Component (A) is exemplified by vinyldimethylsiloxy-endblocked polydimethylsiloxanes, vinyldimethylsiloxy-endblocked dimethylsiloxanevinylmethylsiloxane copolymers, and vinyldimethylsiloxy-endblocked dimethylsiloxanemethylphenylsiloxane copolymers.

The fumed silica (B), which is a reinforcing filler, functions to impart mechanical strength to our claimed compositions. The fumed silica must have a specific surface area of at least 50 m²/g. Component (B) is added at from 1 to 60 weight parts, per 100 weight parts of component (A) and is preferably from 10 to 40 weight parts. The basis for this range is: the addition of too little of component (B) fails to impart a high mechanical strength, while too much (B) causes an excessively high viscosity and a loss of fluidity. Component (B) is preferably a hydrophobic fumed silica afforded by surface treatment with organosilane, organosilazane, organosiloxane oligomer, or their mixtures since this yields improved mechanical strength and tear strength.

The addition of surface-treated zinc carbonate (C) makes it possible to obtain pre-cure fluidity and to generate a cured product with excellent flame retardancy and high-voltage electrical insulating properties such as tracking resistance, erosion resistance, and arc resistance. The zinc carbonate preferably has a particle size in the range from 0.1 to 100 µm, and more particularly in the range from 0.1 to 50 µm.

The surface treating agents for (C) are is exemplified by organosilanes that contain a silicon-bonded hydrolyzable group, such as methyltrimethoxysilane, methyltriethoxysilane, phenyltrimethoxysilane, ethyltrimethoxysilane, n-propyltrimethoxysilane, vinyltrimethoxysilane, phenyltrimethoxysilane, ethyltrimethoxysilane, butenyltrimethoxysilane, hexenyltrimethoxysilane, γ-methacryloxypropyltrimethoxysilane, dimethyldimethoxysilane, dimethyldiethoxysilane, diphenyldimethoxysilane, trimethylmethoxysilane, trimethylethoxysilane, and vinyltriacetoxysilane; by organosilazanes such as hexamethyldisilazane or divinyltetramethyldisilazane; by diorganosiloxane oligomers bearing silanol, silicon-bonded alkenyl, or silicon-bonded alkoxy; by partial hydrolysis condensates of the above-mentioned organosilanes; and by branched polyorganosiloxane oligomers containing the RSiO3/2 unit (T unit) and/or SiO₂ unit (Q unit) and also silanol, silicon-bonded alkenyl, or silicon-bonded alkoxy, where R represents a monovalent hydrocarbon group.

Due to its surface treatment, component (C) surprisingly avoids the viscosity increase that is normally associated with high loadings of a non-treated inorganic filler. Moreover, our component (C) avoids while a defective cure in our addition-curing silicone rubber compositions. Component (C) is prepared simply by adding the treating agent into the inorganic filler (zinc carbonate) while using a mixer. The treatment temperature for this procedure will ordinarily be from 50 to 200°C. However, suitable compositions of the present invention can also be prepared by adding inorganic filler and treating agent to component (A), and then mixing while heating to accomplish surface treatment. Component (C) is added at from 1 to 200 weight parts, and preferably from 10 to 120 weight parts, in each case per 100 weight parts of component (A). The reason for this range is: the addition of too little component (C) fails to produce an acceptable flame retardancy and electrical insulating properties, while additions in excess of 200 weight parts pose a possibility of substantial viscosity increase and reductions in mechanical strength. The sum of the additions of components (C) and (B) is preferably from 20 to 160 weight parts.

The polyorganohydrogensiloxane (D) is a crosslinker for the present composition. Our compositions is crosslinked and cured by the addition reaction of silicon-bonded hydrogen in component (D) with the silicon-bonded alkenyl in component (A) in the presence of the platinum catalyst (E). This component (D) must contain at least 2 silicon-bonded hydrogen atoms in each molecule. Its non-hydrogen silicon-bonded organic groups are by alkyl such as methyl, ethyl, and propyl; aryl such as phenyl or tolyl; and substituted alkyl such as 3,3,3-trifluoropropyl or 3-chloropropyl.

Component (D) can have a straight-chain, branch-containing straight-chain, cyclic, or network molecular structure. The molecular weight of component (D) is not critical, but the viscosity at 25°C is preferably from 3 to 10,000 mPa·s. Component (D) is added in a quantity that will provide a value from 0.5:1 to 20:1 and preferably from 1:1 to 3:1, for the ratio of the number of moles of silicon-bonded hydrogen atom to the number of moles of silicon-bonded aliphatically unsaturated hydrocarbon groups provided by component (A). The present compositions will not undergo an acceptable cure when this molar ratio is below 0.5. A molar ratio in excess of 20 may result in undesirable foaming.

The platinum catalyst (E) is a curing catalyst for our compositions. The platinum catalyst is exemplified by chloroplatinic acid, alcohol-solutions of chloroplatinic acid, chloroplatinic acid/olefin complexes, chloroplatinic acid/divinylsiloxane complexes, platinum black, platinum, and supported platinum. Although the addition of component (E) cannot be rigorously specified, because it will vary as a function of the type of platinum catalyst, it will generally be from 1 to 1,000 weight parts of platinum metal, and is preferably from 5 to 100 weight parts of platinum metal, in each case per 1,000,000 weight parts of component (A).

The surface-treated aluminum hydroxide (F) has a role similar to component (C). In particular, through its combined use with component (C), it can provide the cured products of our compositions with improved flame retardancy and electrical insulating properties. The aluminum hydroxide (c) of component (F) preferably has a particle size from 0.1 to 50 µm, and more preferably from 0.1 to 10 µm. The treating agents encompassed by component (F) is the same agents as for component (C). Because the surface of the aluminum hydroxide has been thusly treated, component (F) avoids the viscosity increase in curable silicone rubber compositions that is associated with high loadings of component (A) with a non-surface-treated aluminum hydroxide. Component (F) is simply prepared by treating the surface of aluminum hydroxide with treating agent by adding them together in a mixer and blending. The treatment temperature in this procedure is from 50 to 200°C, and preferably is from 80 to 180°C. Alternatively, the treating agent and inorganic filler (aluminum hydoxide) is added and blended into component (A) while heating, where the ratio of treating agent to inorganic filler is from 0.1 to 30 weight%. Component (F) is added at from 1 to 200 weight parts, and preferably from 10 to 120 weight parts, in each case per 100 weight parts of component (A).

For component (F) addition, the sum of components (B), (C), and (F) is from 30 to 300 weight parts, and preferably from 40 to 180 weight parts, in each case per 100 weight parts of component (A).

The triazole compound (G) is by itself without effect, but functions to improve the flame retardancy and electrical properties when used in combination with components (C) and (F). This is even more effective when used in combination with component (H). The triazole compound (G) is selected from benzotriazole; 1,2,3-triazole; 1,2,4-triazole; and their derivatives. Since this component has a high melting point, its uniform dispersion in our silicone rubber compositions is advantageously effected by dissolving it in an organic solvent such as ethanol, isopropyl alcohol, benzene, toluene, and xylene. Component (G) is added at from 0.001 to 1 weight part, per 100 weight parts of component (A).

Component (H), which is the reaction mixture of (a) a platinum compound and (b) 3,5-dimethyl-1-hexyn-3-ol, provides additional flame retardancy for our claimed compositions. As used herein, the reaction mixture of a platinum compound and 3,5-dimethyl-1-hexyn-3-ol denotes the reaction product generated by the reaction of these two species, as well as the mixtures of such a reaction product with its 3,5-dimethyl-1-hexyn-3-ol and platinum compound precursors. The platinum compound is exemplified by chloroplatinic acid, the potassium and sodium salts of chloroplatinic acid, chloroplatinic acid/olefin complexes, and chloroplatinic acid/alkenylsiloxane complexes. The weight ratio of platinum compound to 3,5-dimethyl-1-hexyn-3-ol falls in the range from 1:0.1 to 1:100, and preferably is from 1:1 to 1:50. The use of quantities that provide more moles of 3,5-dimethyl-1-hexyn-3-ol than moles of platinum compound is also preferred. Component (H) is added in a quantity that affords from 1 to 1,000 weight parts, and preferably from 10 to 200 weight parts, of platinum metal, in each case per 1,000,000 weight parts of component (A). No functional effect is manifested by this component at below 1 weight part, while no significant additional effects are observed for additions in excess of 1,000 weight parts.

The present compositions are prepared simply by mixing components (A) to (E); (A) to (F); (A) to (G); or (A) to (H), to homogeneity in their prescribed quantities. In a preferred method, a curable silicone rubber base compound is first prepared by mixing together components (A), (B), and (C); or (A), (B), (C), and (F); followed by the admixture of components (D) and (E); and possibly also (G) and (H); into said base compound. In another preferred procedure, components (A), (B), zinc carbonate, and treating agent; or (A), (B), zinc carbonate, treating agent and aluminum hydroxide are first mixed together with heating to give a curable silicone rubber base compound; and components (D) and (E); and possibly also components (G) and (H), are then mixed into said base compound. The heating temperature in this procedure will as a general rule be from 50 to 200°C, and is preferably from 80 to 200°C.

Since the present compositions will gradually cure even at room temperature, the pot life or working time may be improved by the addition of a known addition reaction inhibitor, for example, ethynylcyclohexanol, dimethylformamide, triphenylphosphine, cyclic vinylmethylsiloxanes, 3-methyl-1-butyn-3-ol, 3,5-dimethyl-1-hexyn-3-ol, cyclohexylbutynol, 3-phenyl-1-butyn-3-ol, diphenylethynylcarbinol, and 3,5-dimethyl-3-hexen-1-yne.

The present compositions may also contain those additives known for admixture in silicone rubber compositions. These additives are exemplified by reinforcing fillers other than fumed silica, semi-reinforcing fillers, non-reinforcing fillers, flame-retardants, heat stabilizers, pigments, and adhesion promoters.

The present invention will be further explained below using working examples, in which "parts" denotes "weight parts" and the values for viscosity were measured at 25°C using a rotary viscometer.

The physical properties of silicone rubber moldings were measured by the methods specified in JIS K 6301.

Flame retardancy of silicone rubber moldings was measured as follows. A silicone rubber molding obtained by heat-curing the silicone rubber composition was cut to give a test specimen with a length of 130 mm, width of 13 mm, and thickness of 1 mm. The test specimen was suspended vertically in still air and was ignited by exposure for 10 seconds to a Bunsen burner flame (11-mm flame width, 20-mm inner flame height, 40-mm outer flame height) by just contacting the bottom edge of the test specimen with the top of the inner flame. The Bunsen burner was then withdrawn from the test specimen and the time in seconds was measured until extinction of the flame ignited on the test specimen. This flame retardancy test was run twice on each of 5 test specimens and the average (seconds) of the 10 measurements is reported as the flame retardancy data.

High-voltage electrical insulating properties were measured using an inclined plane anti-tracking test run according to International Electrotechnical Commission (IEC) Publication 587. The test instrument was a model HAT-520 from Hitachi Kasei Kogyo Kabushiki TM Kaisha. The test voltage was 3.5 kV. The criterion A referenced in the measurement results refers to the time in minutes required until the current flowing in a high-voltage circuit passing through the test specimen exceeded 60 mA for 2 seconds. The criterion B similarly referenced in the results refers to the time in minutes for the track to reach a mark on the surface of the test specimen 25 mm from the lower electrode. The erosion was visually inspected and was scored on a three-level scale (weak, moderate, strong).

Example 1. The following were mixed to homogeneity: 100 parts of vinyldimethylsiloxy-endblocked polydimethylsiloxane with a viscosity of 10,000 mPa·s, 18 parts of fumed silica with a specific surface area of 200 m²/g, 65 parts of zinc carbonate with an average particle size of 10 µm, and, as surface-treatment agent, 2 parts of hexamethyldisilazane and 0.6 part water. This mixture was heated for 1 hour at 170°C in a vacuum to give a curlble silicone rubber base compound. After cooling, the following were then mixed to homogeneity into this base compound to give a curable silicone rubber composition: 1.4 parts trimethylsiloxy-endblocked dimethylsiloxane-methylhydrogensiloxane copolymer with a silicon-bonded hydrogen content of 0.7 weight% and, as curing catalyst, chloroplatinic acid in a quantity providing 10 ppm of platinum metal. This curable silicone rubber composition was press-cured in a mold by heating at 150°C for 5 minutes to yield a sheet. The physical properties, flame retardancy, and high-voltage electrical properties of this silicone rubber sheet were measured and the results are reported in Table 1.

Example 2. The following were mixed to homogeneity: 100 parts of vinyldimethylsiloxy-endblocked polydimethylsiloxane with a viscosity of 10,000 mPa·s, 18 parts of fumed silica with a specific surface area of 200 m²/g, 65 parts of zinc carbonate with an average particle size of 10 µm, and, as surface-treatment agent, 2 parts of dimethylhydroxysiloxy-endblocked dimethylsiloxane oligomer. This mixture was heated for 1 hour at 170°C in a vacuum to give a silicone rubber base compound. After cooling, the following were then mixed to homogeneity into this base compound to give a curable silicone rubber composition: 1.4 parts of trimethylsiloxy-endblocked dimethylsiloxane-methylhydrogensiloxane copolymer with a silicon-bonded hydrogen content of 0.7 weight% and, as curing catalyst, chloroplatinic acid in a quantity providing 10 ppm of platinum metal. This curable silicone rubber composition was press-cured by heating in a mold at 150°C for 5 minutes to yield a silicone rubber sheet. The physical properties, flame retardancy, and high-voltage electrical properties of this sheet were measured, and these results are also listed in Table 1.

Example 3. The following were mixed to homogeneity: 100 parts of vinyldimethylsiloxy-endblocked polydimethylsiloxane with a viscosity of 10,000 mPa·s, 18 parts of fumed silica with a specific surface area of 200 m²/g, and, as surface-treatment agent, 2 parts of hexamethyldisilazane and 0.6 part of water. This mixture was heated for 1 hour at 170°C under vacuum to give a curable silicone rubber base compound. This base compound was then mixed to homogeneity with 65 parts of zinc carbonate (surface-treated with dimethylhydroxysiloxy-endblocked dimethylsiloxane oligomer) to give a second curable silicone rubber base compound. After cooling, the following were mixed to homogeneity into said second base compound to give a curable silicone rubber composition: 1.4 parts of trimethylsiloxy-endblocked dimethylsiloxane-methylhydrogensiloxane copolymer with a silicon-bonded hydrogen content of 0.7 weight% and, as curing catalyst, chloroplatinic acid in a quantity providing 10 ppm of platinum metal. This curable silicone rubber composition was press-cured by heating in a mold at 150°C for 5 minutes to yield a silicone rubber sheet. The physical properties, flame retardancy, and high-voltage electrical insulating properties of this sheet were measured, and the results are given in Table 1.

Comparative Example 1. The following were mixed to homogeneity: 100 parts of vinyldimethylsiloxy-endblocked polydimethylsiloxane with a viscosity of 10,000 mPa·s, 18 parts of fumed silica with a specific surface area of 200 m²/g, and, as surface-treatment agent, 2 parts of hexamethyldisilazane and 0.6 part of water. This mixture was heated for 1 hour at 170°C under vacuum to give a curable silicone rubber base compound. This base compound was then mixed with 65 parts of zinc carbonate (average particle size = 10 µm) to give a second curable silicone rubber base compound. After cooling, the following were mixed to homogeneity into said second curable base compound to yield a curable silicone rubber composition: 1.4 parts of trimethylsiloxy-endblocked dimethylsiloxane-methylhydrogensiloxane copolymer with a silicon-bonded hydrogen content of 0.7 weight% and, as curing catalyst, chloroplatinic acid in a quantity providing 10 ppm of platinum metal. When this curable silicone rubber composition was press-cured by heating in a mold at 150°C for 5 minutes to prepare silicone rubber sheet, said sheet was not obtained due to severe cure inhibition.

Example 4. The following were mixed to homogeneity: 100 parts of vinyldimethylsiloxy-endblocked polydimethylsiloxane with a viscosity of 10,000 mPa·s, 18 parts of fumed silica with a specific surface area of 200 m²/g, 15 parts of zinc carbonate with an average particle size of 10 µm, 50 parts of aluminum hydroxide with an average particle size of 1 µm, and, as surface-treatment agent, 2 parts of hexamethyldisilazane, 0.6 part of water, and 2 parts of dimethylhydroxysiloxy-endblocked dimethylsiloxane oligomer. This mixture was heated for 1 hour at 170°C under vacuum to give a curable silicone rubber base compound. After cooling, said base compound was mixed to homogeneity with the following to give a curable silicone rubber composition: 1.4 parts of trimethylsiloxy-endblocked dimethylsiloxane-methylhydrogensiloxane copolymer with a silicon-bonded hydrogen content of 0.7 weight% and, as curing catalyst, chloroplatinic acid in a quantity providing 10 ppm of platinum metal. This curable silicone rubber composition was press-cured by heating in a mold at 150°C for 5 minutes to yield a silicone rubber sheet. The physical properties, flame retardancy, and high-voltage electrical insulating properties of this cured sheet were measured, and these results are listed in Table 2.

Example 5. The following were mixed to homogeneity: 100 parts of vinyldimethylsiloxy-endblocked polydimethylsiloxane with a viscosity of 10,000 mPa·s, 18 parts of fumed silica with a specific surface area of 200 m²/g, and, as surface-treatment agent, 2 parts of hexamethyldisilazane and 0.6 part of water. This mixture was heated for 1 hour at 170°C in a vacuum to give a curable silicone rubber base compound. After cooling, this base compound was then mixed to homogeneity with 15 parts surface-treated zinc carbonate and 50 parts of surface-treated aluminum hydroxide (both surfaces treated with 2 parts of dimethylhydroxysiloxy-endblocked dimethylsiloxane oligomer) to give a second curable silicone rubber base compound. The following were mixed to homogeneity into said second base compound to provide a curable silicone rubber composition: 1.4 parts of trimethylsiloxy-endblocked dimethylsiloxane-methylhydrogensiloxane copolymer with a silicon-bonded hydrogen content of 0.7 weight% and, as curing catalyst, chloroplatinic acid in a quantity providing 10 ppm of platinum metal. This curable silicone rubber composition was press-cured by heating at 150°C in a mold for 5 minutes to yield silicone rubber sheet. The physical properties, flame retardancy, and high-voltage electrical insulating properties of said sheet were measured, and these results are also listed in Table 2.

Comparative Example 2. The following were mixed to homogeneity: 100 parts of vinyldimethylsiloxy-endblocked polydimethylsiloxane with a viscosity of 10,000 mPa·s, 18 parts of fumed silica with a specific surface area of 200 m²/g, and, as surface-treatment agent, 2 parts of hexamethyldisilazane and 0.6 part of water. This mixture was heated for 1 hour at 170°C in a vacuum to give a curable silicone rubber base compound. After cooling, said base compound was mixed to homogeneity with 15 parts of zinc carbonate (average particle size = 10 µm) and 50 parts of aluminum hydroxide (average particle size = 1 µm) to achieve a second curable silicone rubber base compound. The following were mixed to homogeneity into said second base compound to provide a curable silicone rubber composition: 1.4 parts of trimethylsiloxy-endblocked dimethylsiloxane-methylhydrogensiloxane copolymer with a silicon-bonded hydrogen content of 0.7 weight% and, as curing catalyst, chloroplatinic acid in a quantity providing 10 ppm of platinum metal. When this curable silicone rubber composition was press-cured by heating in a mold at 150°C for 5 minutes to prepare silicone rubber sheet, a good-quality silicone rubber sheet was not obtained due to cure inhibition and foaming.

Example 6. The following were mixed to homogeneity into a curable silicone rubber base compound prepared as in Example 4 to give a curable silicone rubber composition: 1.4 parts of trimethylsiloxy-endblocked dimethylsiloxane-methylhydrogensiloxane copolymer with a silicon-bonded hydrogen content of 0.7 weight%, chloroplatinic acid as curing catalyst in a quantity providing 10 ppm of platinum metal, 0.1 part of benzotriazole, and 0.8 part (corresponding to 30 ppm of platinum metal) of a reaction mixture of 3,5-dimethyl-1-hexyn-3-ol and a chloroplatinic acid/divinyltetramethyldisiloxane complex. This silicone rubber composition was press-cured by heating in a mold at 150°C for 5 minutes to yield silicone rubber sheet. The above-mentioned reaction mixture was prepared by mixing 500 parts of 3,5-dimethyl-1-hexyn-3-ol into 100 parts of a chloroplatinic acid/divinyltetramethyldisiloxane complex. The physical properties, flame retardancy, and high-voltage electrical insulating properties of said sheet were measured, and the results are recorded in Table 3.

Example 7. The following were mixed to homogeneity into a curable silicone rubber base compound prepared as in Example 5 to give a curable silicone rubber composition: 1.4 parts of trimethylsiloxy-endblocked dimethylsiloxane-methylhydrogensiloxane copolymer with a silicon-bonded hydrogen content of 0.7 weight%, chloroplatinic acid as curing catalyst in a quantity providing 10 ppm of platinum metal, 0.1 part of benzotriazole, and 0.8 part (corresponding to 30 ppm of platinum metal) of a reaction mixture as described in Example 6 of 3,5-dimethyl-1-hexyn-3-ol and chloroplatinic acid/divinyltetramethyldisiloxane complex. This curable silicone rubber composition was press-cured by heating in a mold at 150°C for 5 minutes to yield silicone rubber sheet. The physical properties, flame retardancy, and high-voltage electrical insulating properties of sheet were measured, and the results are recorded in Table 3.

**Table 1**

| | Example 1 | Example 2 | Example 3 | Comp. Example 1 |
|---|---|---|---|---|
| composition | | | | |
| dimethylvinylsiloxy-endblocked dimethylpolysiloxane (parts) | 100 | 100 | 100 | 100 |
| fumed silica (parts) | 18 | 18 | 18 | 18 |
| zinc carbonate powder (parts) | 65 | 65 | | 65 |
| surface-treated zinc carbonate powder (parts) | | | 65 | |
| hexamethyldisilazane/water (parts) | 2/0.6 | | | |
| dimethylhydroxysiloxy-endblocked dimethylsiloxane oligomer (parts) | | 2 | | |
| trimethylsiloxy-endblocked dimethylsiloxane/methylhydrogensiloxane copolymer (parts) | 1.4 | 1.4 | 1.4 | 1.4 |
| chloroplatinic acid (ppm: platinum metal) | 10 | 10 | 10 | 10 |
| composition viscosity (poise) | 1500 | 1800 | 2000 | 10000 |
| physical properties | | | | |
| durometer (JIS-A) | 32 | 30 | 30 | - |
| tensile strength (kg/cm²) | 30 | 27 | 26 | - |
| elongation (%) | 750 | 760 | 780 | - |
| tear strength A (kg/cm) | 7 | 6 | 5 | - |
| flame retardancy (seconds) | 67 | 62 | 65 | - |
| high-voltage electrical insulating properties | | | | |
| criterion A (minutes) | 360 | 360 | 360 | - |
| criterion B (minutes) | 266 | 257 | 250 | - |
| erosion | moderate | moderate | moderate | - |

**Table 2**

| | Example 4 | Example 5 | Comp. Example 2 |
|---|---|---|---|
| composition | | | |
| dimethylvinylsiloxy-endblocked dimethylpolysiloxane (parts) | 100 | 100 | 100 |
| fumed silica (parts) | 18 | 18 | 18 |
| zinc carbonate powder (parts) | 15 | | 15 |
| surface-treated zinc carbonate powder (parts) | | 15 | |
| aluminum hydroxide powder (parts) | 50 | | 50 |
| surface-treated aluminum hydroxide powder (parts) | | 50 | |
| hexamethyldisilazane/water (parts) | 2/0.6 | | |
| dimethylhydroxysiloxy-endblocked dimethylsiloxane oligomer (parts) | 2 | | |
| trimethylsiloxy-endblocked dimethylsiloxane/methylhydrogensiloxane copolymer (parts) | 1.4 | 1.4 | 1.4 |
| chloroplatinic acid (ppm: platinum metal) | 10 | 10 | 10 |

| composition viscosity (poise) | 2000 | 2000 | 12000 |
|---|---|---|---|
| physical properties | | | |
| durometer (JIS-A) | 34 | 32 | - |
| tensile strength (kg/cm²) | 40 | 38 | - |
| elongation (%) | 740 | 750 | - |
| tear strength A (kg/cm) | 12 | 11 | - |

| flame retardancy (seconds) | 29 | 30 | - |
|---|---|---|---|
| high-voltage electrical insulating properties | | | |
| criterion A (minutes) | 360 | 360 | - |
| criterion B (minutes) | 348 | 340 | - |
| erosion | moderate | moderate | - |

**Table 3**

| | Example 6 | Example 7 |
|---|---|---|
| composition | | |
| dimethylvinylsiloxy-endblocked dimethylpolysiloxane (parts) | 100 | 100 |
| fumed silica (parts) | 18 | 18 |
| zinc carbonate powder (parts) | 15 | |
| surface-treated zinc carbonate powder (parts) | | 15 |
| aluminum hydroxide powder (parts) | 50 | |
| surface-treated aluminum hydroxide powder (parts) | | 50 |
| hexamethyldisilazane/water (parts) | 2/0.6 | |
| dimethylhydroxysiloxy-endblocked dimethylsiloxane oligomer (parts) | 2 | |
| trimethylsiloxy-endblocked dimethylsiloxane/methylhydrogensiloxane copolymer (parts) | 1.4 | 1.4 |
| chloroplatinic acid (ppm: platinum metal) | 10 | 10 |
| benzotriazole (parts) | 0.1 | 0.1 |
| reaction mixture (parts) | 0.8 | 0.8 |

| composition viscosity (poise) | 2000 | 2000 |
|---|---|---|
| physical properties | | |
| durometer (JIS-A) | 34 | 32 |
| tensile strength (kg/cm²) | 40 | 38 |
| elongation (%) | 740 | 750 |
| tear strength A (kg/cm) | 12 | 11 |

| flame retardancy (seconds) | 2 | 3 |
|---|---|---|
| high-voltage electrical insulating properties | | |
| criterion A (minutes) | 360 | 360 |
| criterion B (minutes) | 360 | 360 |
| erosion | small | small |

## Claims

1. A silicone rubber composition comprising
(A) 100 weight parts of polyorganosiloxane having a viscosity at 25°C of from 100 to 100,000 mPa·s and the formula${\text{R}}^{\text{1}} {}_{\text{a}} {\text{R}}^{\text{2}} {}_{\text{b}} {\text{SiO}}_{\text{(4-a-b)/2}} \text{,}$ where R¹ represents monovalent hydrocarbon groups that are free of aliphatically unsaturated bonding, R² represents aliphatically unsaturated hydrocarbon groups, a has a value from 1.90 to 2.05, b has a value from 0.0005 to 0.1, and a + b has a value of 1.91 to 2.06;
(B) 1 to 60 weight parts of fumed silica with a specific surface area of at least 50 m²/g;
(C) 1 to 200 weight parts of zinc carbonate afforded by treating the surface
with an organosilicon compound selected from the group consisting of organosilanes, organosilazanes, organosiloxane oligomers, and their mixtures;
(D) a polyorganohydrogensiloxane comprising at least 2 silicon-bonded hydrogen atoms in each molecule, in a quantity that affords a value from 0.5:1 to 20:1 for the ratio of the number of moles of silicon-bonded hydrogen to the number of moles of silicon-bonded aliphatically unsaturated hydrocarbon groups in component (A);
and
(E) platinum catalyst in a catalytic quantity.

2. The silicone rubber composition of claim 1 further comprising
(F) 1 to 200 weight parts of aluminum hydroxide obtained by surface treatment with an organosilicon compound selected from the group consisting of organosilanes, organosilazanes, organosiloxane oligomers, and their mixtures.

3. The silicone rubber composition of claims 1 or 2 further comprising
(G) 0.001 to 1 weight part of a triazole compound; or
(H) the reaction mixture of a platinum compound, at 1 to 1,000 weight parts of platinum metal for each 1,000,000 weight parts of component (A), and 3,5-dimethyl-1-hexyn-3-ol.

4. The curable silicone rubber composition of any of Claims 1-3, wherein the organosilicone compound is selected from hexamethyldisilazane or a hydroxylendblocked dimethylsiloxane oligomer.

5. The curable silicone rubber composition of Claim 3, where component (G) is benzotriazole.

6. The curable silicone rubber composition of Claim 3, where component (E) is chloroplatinic acid or a chloroplatinic acid/divinyltetramethyldisiloxane complex.

## Patentansprüche

1. Sili conkautschukzusammensetzung, enthaltend:
(A) 100 Gewichtsteile eines Polyorganosiloxans mit einer Viskosität bei 25°C von 100 bis 100.000 mPa·s und der Formel${\text{R}}^{\text{1}} {}_{\text{a}} {\text{R}}^{\text{2}} {}_{\text{b}} {\text{SiO}}_{\text{(4-a-b)/2}} \text{,}$ worin R¹ eine einbindige Kohlenwasserstoffgruppe darstellt, die frei von aliphatisch ungesättigten Bindungen ist, R² eine aliphatisch ungesättigte Kohlenwasserstoffgruppe darstellt, a einen Wert von 1,90 bis 2,05 aufweist, b einen Wert von 0,0005 bis 0,1 aufweist und a+b einen Wert von 1,91 bis 2,06 aufweist,
(B) 1 bis 60 Gewichtsteile pyrogener Kieselsäure mit einer spezifischen Oberfläche von mindestens 50 m²/g,
(C) 1 bis 200 Gewichtsteile Zinkcarbonat, bereitet durch Behandlung der Oberfläche mit einer Organosiliciumverbindung, ausgewählt aus der Gruppe bestehend aus Organosilanen, Organosilazanen, Organosiloxanoligomeren und deren Mischungen,
(D) ein Polyorganohydrogensiloxan mit mindestens 2 siliciumgebundenen Wasserstoffatomen in jedem Molekül in einer Menge, die einen Wert von 0,5:1 bis 20:1 für das Verhältnis der Molzahl von siliciumgebundenem Wasserstoff zu der Mol zahl von siliciumgebundenen aliphatisch ungesättigten Kohlenwasserstoffgruppen in Komponente (A) gewährleistet,
und
(E) einen Platinkatalysator in einer katalytischen Menge.

2. Siliconkautschukzusammensetzung nach Anspruch 1, die weiterhin
(F) 1 bis 200 Gewichtsteile Aluminiumhydroxid enthält, das durch Oberflächenbehandlung mit einer Organosiliciumverbindung, ausgewählt aus der Gruppe bestehend aus Organosilanen, Organosilazanen, Organosiloxanoligomeren und deren Mischungen, erhalten wurde.

3. Siliconkautschukzusammensetzung nach Anspruch 1 oder 2, weiterhin enthaltend:
(G) 0,001 bis 1 Gewichtsteil einer Triazolverbindung oder
(H) die Reaktionsmischung einer Platinverbindung zu 1 bis 1.000 Gewichtsteilen Platinmetall auf jeweils 1.000.000 Gewichtsteile Komponente (A) und 3,5-Dimethyl-1-hexin-3-ol.

4. Härtbare Siliconkautschukzusammensetzung nach einem der Ansprüche 1 bis 3, worin die Organosiliciumverbindung aus Hexamethyldisilazan oder einem Dimethylsiloxanoligoner mit Hydroxylendgruppen ausgewählt ist.

5. Härtbare Siliconkautschukzusammensetzung nach Anspruch 3, worin Komponente (G) Benzotriazol ist.

6. Härtbare Siliconkautschukzusammensetzung nach Anspruch 3, worin Komponente (E) Chloroplatinsäure oder ein Chloroplatinsäure/Divinyltetramethyldisiloxan-Komplex ist.

## Revendications

1. Une composition de caoutchouc de silicone comprenant
(A) 100 parties en poids d'un polyorganosiloxane ayant une viscosité de 100 à 100 000 mPa.s à 25°C et la formule${\text{R}}^{\text{1}} {}_{\text{a}} {\text{R}}^{\text{2}} {}_{\text{b}} {\text{SiO}}_{\text{(4-a-b)/2}}$ où R¹ représente des radicaux hydrocarbonés monovalents qui sont dépourvus de liaison aliphatiquement insaturée, R² représente des radicaux hydrocarbonés aliphatiquement insaturés, la valeur de a est de 1,90 à 2,05, la valeur de b est de 0,0005 à 0,1, et la valeur de a+b est de 1,91 à 2,06 ;
(B) 1 à 60 parties en poids de silice de fumée ayant une surface spécifique d'au moins 50 m²/g ;
(C) 1 à 200 parties en poids de carbonate de zinc obtenu par traitement de la surface avec un composé organosilicié choisi dans le groupe formé par les organosilanes, les organosilazanes, les oligomères d'organosiloxane et leurs mélanges ;
(D) un polyorganohydrogénosiloxane comprenant au moins 2 atomes d'hydrogène liés au silicium dans chaque molécule, en une quantité qui donne une valeur de 0,5:1 à 20:1 au rapport du nombre de moles d'atomes d'hydrogène liés au silicium au nombre de moles de radicaux hydrocarbonés aliphatiquement insaturés liés au silicium présents dans le composant (A) ; et
(E) un catalyseur au platine en une quantité catalytique.

2. La composition de caoutchouc de silicone de la revendication 1, comprenant de plus
(F) 1 à 200 parties en poids d'hydroxyde d'aluminium obtenu par traitement de surface avec un composé organosilicié choisi dans le groupe formé par les organosilanes, les organosilazanes, les oligomères d'organosiloxane et leurs mélanges.

3. La composition de caoutchouc de silicone de la revendication 1 ou 2, comprenant de plus
(G) 0,001 à 1 partie en poids d'un composé triazole ; ou
(H) le mélange réactionnel d'un composé du platine, à raison de 1 à 1000 parties en poids de platine métallique pour 1 000 000 parties en poids de composant (A), et de 3,5diméthyl-1-hexyne-3-ol.

4. La composition de caoutchouc de silicone durcissable de l'une quelconque des revendications 1 à 3, dans laquelle le composé organosilicié est choisi parmi l'hexaméthyldisilazane ou un oligomère de diméthylsiloxane terminé par des groupes hydroxyle.

5. La composition de caoutchouc de silicone de la revendication 3, dans laquelle le composant (G) est le benzotriazole.

6. La composition de caoutchouc de silicone de la revendication 3, dans laquelle le composant (E) est l'acide chloroplatinique ou un complexe acide chloroplatinique/divinyltétraméthyldisiloxane.
